# FASCICULE DE BREVET EUROPEEN

(11) **EP 2 726 325 B1**
(45) Date de publication et mention de la délivrance du brevet: **10.05.2017**
(21) Numéro de dépôt: 12731545.5
(22) Date de dépôt: 07.06.2012
(51) Int. Cl.: B60N 2/68

(54) **ARMATURE DE DOSSIERS DE SIEGES DU RANG ARRIERE D'UN VEHICULE AUTOMOBILE.**
RÜCKSITZ LEHNENRAHMEN EINES KRAFTFAHRZEUGS
REAR SEAT BACKREST FRAME OF AN AUTOMOTIVE VEHICLE

(30) Priorité: 29.06.2011 FR 1155831
(43) Date de publication de la demande: 07.05.2014
(73) Titulaire: PEUGEOT CITROËN AUTOMOBILES S.A., 78140 Vélizy Villacoublay (FR)
(72) Inventeur: GUENET, Mathieu, F-95370 Montigny Les Cormeilles (FR); COTTA, Gérald, F-78330 Fontenay Le Fleury (FR)
(74) Mandataire: Jeannin, Laurent Jean-Pierre
(86) Numéro de dépôt international: PCT/FR2012/051284
(87) Numéro de publication internationale: WO 2013/001199

(56) Documents cités:
- JP-A- 2001 000 272
- JP-U- 61 087 136

## Description

L'invention concerne principalement une armature de dossiers de sièges du rang arrière d'un véhicule automobile.

L'invention concerne également un véhicule automobile équipé d'au moins une telle armature.

Les armatures de dossiers des sièges des rangs arrière trois places de véhicule automobile sont généralement constituées d'une première armature correspondant à un dossier de siège latéral, et d'une deuxième armature de plus grande largeur correspondant au dossier de siège latéral opposé et au dossier de siège central.

Ces armatures peuvent être constituées d'un cadre tubulaire rigide et d'un réseau de fils d'acier à l'intérieur du cadre tubulaire.

Ces armatures peuvent être également constituées de tôles pleines et de profilés en métal conférant les fonctionnalités nécessaire notamment pour la fixation de l'enrouleur de ceinture.

Ces armatures sont spécifiquement dimensionnées selon le véhicule dans lequel elles sont montées. Par conséquent, il n'est pas possible d'utiliser ces armatures, et en particulier la deuxième armature couvrant le dossier de siège latéral et le dossier de siège central, pour des véhicules présentant des largeurs différentes de rang de sièges arrière.

Par ailleurs, ces armatures présentent un poids important. Or, la réduction des émissions de dioxyde de carbone passe notamment dans ce domaine par la réduction du poids des véhicules.

Enfin, en cas de choc bagage, c'est-à-dire d'un choc avant entraînant la projection vers l'avant des bagages contenus dans le coffre du véhicule, la deuxième armature couvrant le dossier de siège latéral et le dossier de siège central est soumis à d'importantes déformations par enfoncement, ce qui cause un problème de sécurité pour les occupants du rang arrière.

Le document JP 2011 000 272 A divulgue une armature de dossier de siège.

Dans ce contexte, la présente invention vise une armature de dossiers de sièges de rang arrière d'un véhicule automobile qui est allégé en poids, qui implique des éléments pouvant être utilisés dans des véhicules présentant des largeurs différentes de rang de sièges arrière, et qui est suffisamment résistante en cas de choc bagage.

A cet effet, l'armature de dossiers de sièges du rang arrière d'un véhicule automobile de l'invention comporte au moins un élément de support principal formant l'armature d'un dossier de siège latéral, et un élément de support d'extension solidaire de l'élément de support principal et réalisé au moyen d'un support filaire formant l'armature du dossier de siège central,
l'élément de support d'extension est constitué d'au moins un fil d'acier plié réalisé dans le même plan que l'élément de support principal et solidarisé au dit élément de support principal au niveau d'au moins deux points de fixation,
le fil d'acier plié comporte une série de pliages s'étendant en hauteur depuis la partie supérieure de l'élément de support principal jusqu'à la partie inférieure du dit élément de support principal,
caractérisée en ce que le fil d'acier plié comporte six pliages courbes formant sensiblement un M en rotation de 90 °C et dont la partie centrale est plane et en appui de contact sur l'élément de support principal.

L'armature de l'invention peut également comporter les caractéristiques optionnelles suivantes considérées selon toutes les combinaisons techniques possibles:
- les deux points de fixation du fil d'acier plié sont réalisés par soudage.
- l'élément de support principal comporte au moins un cadre tubulaire sur lequel est soudé le fil d'acier plié.

- le fil d'acier présente un diamètre compris entre 8 et 10 millimètres.
- l'armature de l'invention comporte une armature d'appui tête solidaire de la partie de support d'extension et réalisée en fil d'acier.
- la largeur de la partie de support d'extension est adaptée à la largeur du dossier de siège central.

Enfin, l'invention porte sur un véhicule automobile comportant au moins une armature de dossier de sièges arrière telle que précédemment décrite.

Enfin, l'invention porte également sur un véhicule automobile équipé d'au moins une armature de dossiers de sièges de rang arrière telle que précédemment définie.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique de face de l'armature d'un rang de sièges arrière comportant l'armature de sièges arrière de l'invention selon une première variante pour un rang de sièges arrière adapté à trois places compactes, et
- la figure 2 est une représentation schématique de face de l'armature d'un rang de sièges arrière comportant l'armature de sièges arrière de l'invention selon une seconde variante pour un rang de sièges arrière adapté à trois places larges.

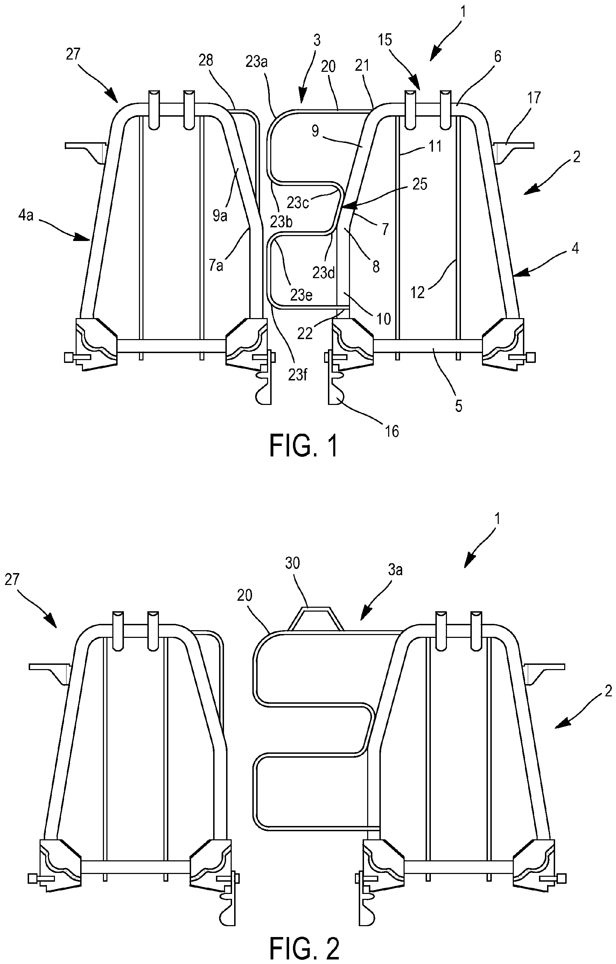

En référence à la figure 1, l'armature de sièges arrière de l'invention 1 comporte un élément de support principal 2 correspondant à l'armature du dossier de siège latéral gauche dans cette variante, et un élément de support d'extension 3 solidaire de l'élément de support principal 2.

L'élément de support principal 2 est de type connu présentant un cadre rigide tubulaire 4 d'un diamètre de section en coupe de 25 millimètres et d'épaisseur de métal de 1,5 millimètre.

Le segment transversal inférieur 5 du cadre rigide tubulaire 4 présente une largeur supérieure à la largeur du segment transversal supérieur 6 de ce cadre 4.

Par ailleurs, le segment latéral droit 7 situé du coté de la partie de support d'extension 3, présente un décroché 8 de sorte que la partie supérieure 9 du segment latéral droit 7 présente une inclinaison plus important que la partie inférieure 10 de ce segment latéral droit 7 du cadre rigide tubulaire 4.

Deux fils d'acier 11,12 conférant la rigidité de l'élément de support principal 2 s'étendent verticalement sur toute la hauteur du cadre rigide tubulaire 4 depuis le segment transversal supérieur 6 jusqu'au segment transversal inférieur 5.

L'élément de support principal 2 présente en outre des éléments de fixation 15 à la tôle de fond de coffre ainsi qu'un élément d'interface 16 avec la boucle de ceinture et un élément de passage 17 de la boucle de ceinture.

L'élément de support d'extension 3 est réalisé au moyen d'un fil d'acier plié 20 qui est dans le même plan que l'élément de support principal 2.

Le fil d'acier plié 20 s'étend sur toute la hauteur de l'élément de support principal 2 depuis un premier point de fixation par soudage 21 situé à la jonction de la partie supérieure 9 du segment latéral droit 7 et du segment supérieur 6 de l'élément de support principal 2, jusqu'à un deuxième point de fixation par soudage 22 situé en partie basse de la partie inférieure 10 du segment latéral droit 7 de l'élément de support principal.

Le fil d'acier plié 20 présente six pliages courbes 23a,23b,23c,23d,23e,23f formant une forme générale de M en rotation de 90° dans le sens anti horaire, et dont la partie centrale 25 est plane et en appui de contact sur le segment latéral droit 7 de l'élément de support principal 2.

En référence à la figure 2, l'élément de support d'extension 3 peut comporter une armature d'appui tête 30 réalisée en fil d'acier et solidarisée par soudage au fil d'acier 20.

Le fil d'acier plié 20 qui constitue l'élément de support d'extension 3 présente un diamètre compris entre 8 et 10 millimètres.

L'élément de support d'extension 3 forme ainsi armature de dossier de siège central.

Comme illustré sur la figure 1, le rang de sièges arrière comporte, outre l'armature de l'invention 1, une armature 27 du dossier de siège latéral gauche qui est symétriquement identique à l'élément de support principal 2 de l'armature 1 de l'invention, outre l'adjonction d'une partie coudée 28 réalisée en fil d'acier plié et solidarisée à la partie supérieure 9a du segment latéral gauche 7a du cadre rigide tubulaire 4a de l'armature 27 permettant la fixation du garnissage non représenté.

La configuration de l'élément de support d'extension 3 permet d'adapter simplement cet élément de support d'extension 3 selon la largeur du rang arrière.

En référence à la figure 2, lorsque la largeur du rang arrière est plus importante et/ou lorsque la largeur du dossier de siège central est plus importante que la représentation de la figure 1, la largeur du pliage du fil d'acier 20 sera adaptée de façon que la largeur de l'élément de support d'extension 3 soit plus importante.

Cette adaptation est simple à mettre en oeuvre puisqu'elle ne nécessite que la modification de la structure de l'élément de support d'extension 3, l'élément de support principal 2 restant inchangé.

Par ailleurs, l'utilisation d'un fil d'acier 20 comme armature de dossier de siège central allège considérablement le poids de l'armature du rang de siège arrière.

Enfin, les premier 21 et second 22 points de fixation par soudage de l'élément de support d'extension 3 à l'élément de support principal 2 constituent une zone mécanique solide permettant de résister à la force de propulsion des bagages contre le dossier du rang arrière lors d'un choc bagage.

## Revendications

1. Armature de dossiers de sièges du rang arrière d'un véhicule automobile, comportant au moins un élément de support principal (2) formant l'armature d'un dossier de siège latéral, et un élément de support d'extension (3,3a) solidaire de l'élément de support principal (2) et réalisé au moyen d'un support filaire (20) formant l'armature du dossier de siège central,
l'élément de support d'extension (3,3a) est constitué d'au moins un fil d'acier plié (20) réalisé dans le même plan que l'élément de support principal (2), et solidarisé au dit élément de support principal (2) au niveau d'au moins deux points de fixation (21,22),
le fil d'acier plié (20) comporte une série de pliages (23a,23b,23c,23d,23e,23f) s'étendant en hauteur depuis la partie supérieure (9) de l'élément de support principal (2) jusqu'à la partie inférieure (10) du dit élément de support principal (2),
**caractérisée en ce que** le fil d'acier plié (20) comporte six pliages courbes (23a,23b,23c,23d,23e,23f) formant sensiblement un M en rotation de 90°C et dont la partie centrale (25) est plane et en appui de contact sur l'élément de support principal (2).

2. Armature selon la revendication 1, **caractérisé en ce que** les deux points de fixation (21,22) du fil d'acier plié (20) sont réalisés par soudage.

3. Armature selon la revendication 2, **caractérisée en ce que** l'élément de support principal (2) comporte au moins un cadre tubulaire (4) sur lequel est soudé le fil d'acier plié (20).

4. Armature selon l'une quelconque des revendications précédentes, **caractérisé en ce que** le fil d'acier présente un diamètre compris entre 8 et 10 millimètres.

5. Armature selon l'une quelconque des revendications précédentes, **caractérisé en ce qu'**elle comporte une armature d'appui tête (30) solidaire de la partie de support d'extension (3a) et réalisée en fil d'acier.

6. Armature selon l'une quelconque des revendications précédentes, **caractérisé en ce que** la largeur de la partie de support d'extension (3,3a) est adaptée à la largeur du dossier de siège central.

7. Véhicule automobile, **caractérisé en ce qu'**il comporte au moins une armature de dossier de sièges arrière selon l'une quelconque des revendications 1 à 6.

## Patentansprüche

1. Bewehrung von Sitzrückenlehnen der hinteren Reihe eines Kraftfahrzeugs, die mindestens ein Hauptträgerelement (2), das die Bewehrung einer seitlichen Sitzrückenlehne bildet, und ein Erweiterungsträgerelement (3, 3a), das fest mit dem Hauptträgerelement (2) verbunden und mittels eines Drahtträgers (20) hergestellt ist, der die Bewehrung der zentralen Sitzrückenlehne bildet, umfasst, wobei das Erweiterungsträgerelement (3, 3a) aus mindestens einem gefalteten Stahldraht (20) besteht, der in derselben Ebene hergestellt ist wie das Hauptträgerelement (2) und fest mit dem Hauptträgerelement (2) im Bereich von mindestens zwei Befestigungspunkten (21, 22) verbunden ist, wobei der gefaltete Stahldraht (20) eine Reihe von Faltungen (23a, 23b, 23c, 23d, 23e, 23f) umfasst, die sich in Höhe ausgehend von dem oberen Teil (9) des Hauptträgerelements (2) bis zu dem unteren Teil (10) des Hauptträgerelements (2) erstreckt, **dadurch gekennzeichnet, dass** der gefaltete Stahldraht (20) sechs gebogene Faltungen (23a, 23b, 23c, 23d, 23e, 23f) umfasst, die im Wesentlichen ein M in Drehung um 90° bilden, und deren zentraler Teil (25) flach und in Berührungsauflage auf dem Hauptträgerelement (2) ist.

2. Bewehrung nach Anspruch 1, **dadurch gekennzeichnet, dass** die zwei Befestigungspunkte (21, 22) des gefalteten Stahldrahts (20) durch Schweißen hergestellt sind.

3. Bewehrung nach Anspruch 2, **dadurch gekennzeichnet, dass** das Hauptträgerelement (2) mindestens einen röhrenförmigen Rahmen (4) umfasst, auf den der gefaltete Stahldraht (20) geschweißt ist.

4. Bewehrung nach einem der vorhergehenden Ansprüche, **dadurch gekennzeichnet, dass** der Stahldraht einen Durchmesser zwischen 8 und 10 mm umfasst.

5. Bewehrung nach einem der vorhergehenden Ansprüche, **dadurch gekennzeichnet, dass** sie eine Kopfstützenbewehrung (30) umfasst, die fest mit dem Erweiterungsträgerteil (3a) verbunden und aus Stahldraht hergestellt ist.

6. Bewehrung nach einem der vorhergehenden Ansprüche, **dadurch gekennzeichnet, dass** die Breite des Erweiterungsträgerteils (3, 3a) an die Breite der zentralen Sitzrückenlehne angepasst ist.

7. Kraftfahrzeug, **dadurch gekennzeichnet, dass** es mindestens eine Bewehrung für Rückenlehne hinterer Sitze nach einem der Ansprüche 1 bis 6 umfasst.

## Claims

1. A framework for the backrests of seats of the back row of a motor vehicle, comprising at least one main support element (2) forming the framework of a backrest of a side seat, and an extension support element (3, 3a) secured to the main support element (2) and made using a wire support (20) forming the framework of the backrest of the central seat, the extension support element (3, 3a) is constituted by at least one bent steel wire (20) realized in the same plane as the main support element (2), and secured to said main support element (2) at the level of at least two attachment points (21, 22), the bent steel wire (20) comprises a series of bends (23a, 23b, 23c, 23d, 23e, 23f) extending at the top from the upper part (9) of the main support element (2) to the lower part (10) of said main support element (2),
**characterized in that** the bent steel wire (20) comprises six curved bends (23a, 23b, 23c, 23d, 23e, 23f) forming substantially an M in rotation of 90° and the central part (25) of which is flat and resting in contact on the main support element (2).

2. The framework according to Claim 1, **characterized in that** the two attachment points (21, 22) of the bent steel wire (20) are realized by welding.

3. The framework according to Claim 2, **characterized in that** the main support element (2) comprises at least one tubular frame (4) on which the folded steel wire (20) is welded.

4. The framework according to any one of the preceding claims, **characterized in that** the steel wire has a diameter comprised between 8 and 10 millimetres.

5. The framework according to any one of the preceding claims, **characterized in that** it comprises a headrest framework (30) integral with the extension support part (3a) and made from steel wire.

6. The framework according to any one of the preceding claims, **characterized in that** the width of the extension support part (3, 3a) is adapted to the width of the backrest of the central seat.

7. A motor vehicle, **characterized in that** it comprises at least one backrest framework of rear seats according to any one of the preceding Claims 1 to 6.
